# EUROPÄISCHE PATENTANMELDUNG

(11) **EP 0 969 577 A2**
(43) Veröffentlichungstag der Anmeldung: **05.01.2000**
(21) Anmeldenummer: 99112590.7
(22) Anmeldetag: 01.07.1999
(51) Int. Cl.: H02B 1/42

(54) **Elektrische Schaltanlage**

(30) Priorität: 03.07.1998 DE 29811907 U
(71) Anmelder: Natus GmbH & Co.KG, 54292 Trier (DE)
(72) Erfinder: Perle, Josef, 72622 Nürtingen (DE); Meyer, Johann, 54664 Preist (DE)
(74) Vertreter: Manitz, Finsterwald & Partner

(57) **Zusammenfassung**

Elektrische Schaltanlage zur Steuerung mehrerer Geräte, insbesondere Motoren, mit mehreren Einschubrahmen (4), in die jeweils ein oder mehrere Einschübe (5) mit Schaltgeräten einschiebbar und mit dort vorhandenen Energieversorgungsanschlüssen (11) kontaktierbar sind, einer gemeinsamen Energieversorgung für die Einschubrahmen (4) und jedem Schaltgerät zugeordneten separaten Steuerleitungen (9), wobei zur Verringerung des Herstellungsaufwands und zur Vergrößerung der Variationsmöglichkeiten die Einschubrahmen (4) für die Schaltgeräte jeweils einzeln oder gruppenweise in der Nähe der zugeordneten zu steuernden Geräte angeordnet sind, und die Energieversorgung über in einem Ring (6) von Einschubrahmen (4) zu Einschubrahmen (4) geführte Leitungen (7, 8) erfolgt.

## Beschreibung

Die vorliegende Erfindung betrifft eine elektrische Schaltanlage zur Steuerung mehrerer Geräte, insbesondere Motoren, mit mehreren Einschubrahmen, in die jeweils ein oder mehrere Einschübe mit Schaltgeräten einschiebbar und mit dort vorhandenen Energieversorgungsanschlüssen kontaktierbar sind, einer gemeinsamen Energieversorgung für die Einschubrahmen und jedem Schaltgerät zugeordneten separaten Steuerleitungen.

Derartige Schaltanlagen dienen beispielsweise als Motorkontrolleinrichtungen. Es sind dabei in der Regel eine Vielzahl von Motoren zu kontrollieren. Die den einzelnen Motoren zugeordneten Schaltgeräte werden daher in Schaltschränken zusammengefaßt. Die Schaltschränke sind mit Einschubrahmen versehen, in welche die in Einschüben angeordneten Schaltgeräte einschiebbar sind. Die Schaltschränke sind an einer zentralen Stelle angeordnet, um gemeinsam bedient werden zu können.

Der Erfindung liegt die Aufgabe zugrunde, elektrische Schaltanlagen der eingangs genannten Art zu verbessern. Insbesondere sollen der Herstellungsaufwand verringert und die Variationsmöglichkeiten vergrößert werden.

Diese Aufgabe wird dadurch gelöst, daß die Einschubrahmen für die Schaltgeräte jeweils einzeln oder gruppenweise in der Nähe der zugeordneten zu steuernden Geräte angeordnet sind, und daß die Energieversorgung über in einem Ring von Einschubrahmen zu Einschubrahmen geführte Leitungen erfolgt.

Erfindungsgemäß ist also vorgesehen, die Einschubrahmen mit den Schaltgeräten nicht zentral anzuordnen, sondern einzeln oder gruppenweise in der Nähe der zu steuernden Geräte, das heißt dezentral. Dies hat den Vorteil, daß eine mehrfache Verlegung von Energieversorgungsleitungen von der Zentrale zu den einzelnen Geräten entfällt. Die Energieversorgungsleitungen sind lediglich einfach von einem Hauptenergieanschluß zu den dezentral angeordneten Einschubrahmen zu führen. Durch die erfindungsgemäße Ringanordnung geschieht dies in günstiger Weise.

Nach einer weiteren Ausgestaltung der Erfindung sind die Einschubrahmen als stapelbare Einheiten ausgebildet. Die erfindungsgemäße elektrische Schaltanlage ist also modular aufgebaut und ermöglicht dadurch in einfacher Weise einen variablen Aufbau mit unterschiedlicher Anzahl von Schaltgeräten je nach Bedarf.

Nach einer weiteren Ausgestaltung der Erfindung sind die Energieversorgungsanschlüsse der stapelbaren Einschübe automatisch miteinander kontaktierbar. Der Aufbau der Anlage wird dadurch vereinfacht.

Nach einer weiteren Ausgestaltung der Erfindung weisen die Einschübe, insbesondere rückwärtig, vertikale Kontaktschienen auf, die beim Stapeln der Einschübe jeweils miteinander in Kontakteingriff gelangen. Bevorzugt sind die beiden Enden der Kontaktschiene als zueinander reziproke Stecker und Steckeraufnahme ausgebildet. Dies ist konstruktiv unaufwendig und ermöglicht in einfacher und sicherer Weise die automatische Herstellung einer elektrischen Verbindung der aufeinandergestapelten Einheiten.

Nach einer weiteren Ausgestaltung der Erfindung ist ein auf den obersten Einschubrahmen aufsetzbarer Deckel vorgesehen. Der Deckel bewirkt einen Abschluß der gestapelten Einheiten nach oben und einen Schutz der Kontaktschienen. Der Deckel ist dabei bevorzugt ebenso wie die Einheiten auf die Kontaktschienen aufsteckbar.

Für die Energieversorgungsleitungen ist an einer Zentrale bevorzugt ein Hauptleistungsschalter vorgesehen, durch welchen die Energieversorgung aller Einschubrahmen gemeinsam unterbrochen werden kann. Zusätzlich können zwischen den einzelnen Einschubrahmen Zwischenschalter für die Energieversorgung vorgesehen sein. Auf diese Weise können einzelne oder mehrere Einschubrahmen unabhängig von der Energiezufuhr abgetrennt werden.

Die Schaltgeräte weisen jeweils bevorzugt einen Überlastschutz sowie Meldekontakte auf. Damit sind die einzelnen Schaltgeräte in dieser Hinsicht autark.

Der bevorzugte Einsatz der erfindungsgemäßen Schaltanlage ist für Schaltgeräte mit Leistungen bis ca. 630 A, insbesondere zwischen ca. 200 A und 250 A vorgesehen.

Ein Ausführungsbeispiel der Erfindung ist in der Zeichnung dargestellt und wird nachfolgend beschrieben. Es zeigen, jeweils in schematischer Darstellung:
- Figur 1: eine perspektivische Ansicht eines dezentralen Einschubrahmens mit vier Einschüben,
- Figur 2: eine Seitenansicht einer Anordnung aus zwei dezentralen Einschubrahmen und
- Figur 3: eine Rückansicht der Anordnung von Figur 2.

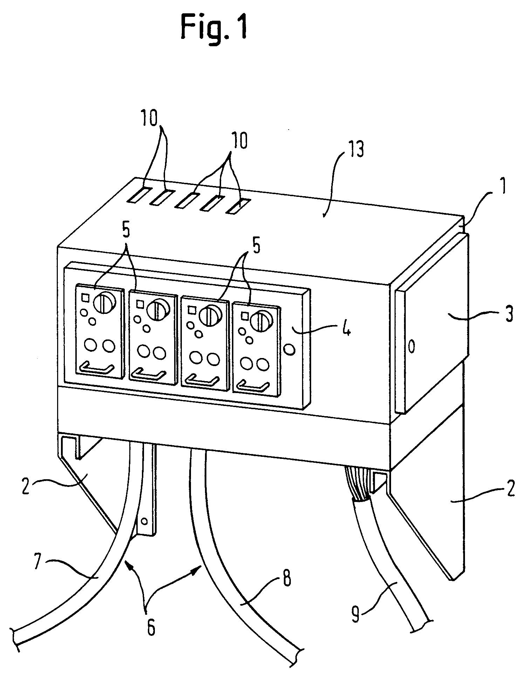

Der in Figur 1 dargestellte dezentrale Einschubrahmen umfaßt ein Gehäuse 1, welches über Füße 2 abgestützt und über eine seitliche Klappe 3 zugänglich ist. An der Vorderseite ist der Einschubrahmen 4 ausgebildet, in welchen, wie dargestellt, vier Einschübe 5 eingeschoben sind. Jeder Einschub 5 trägt ein Schaltgerät, mit welchem ein hier nicht dargestelltes Gerät, beispielsweise ein Motor, steuerbar ist. Statt der dargestellten vier kleinen Einschübe 5 könnte in den Rahmen 4 auch ein großer, hier nicht dargestellter Einschub eingeschoben werden.

Über eine Ringleitung 6 wird der Einschubrahmen 4 mit Energie versorgt. Die Ringleitung 6 umfaßt dabei ein von einem vorhergehenden Einschubrahmen 4 kommendes mehrpoliges Kabel 7 und ein zum nächstfolgenden Einschubrahmen 4 führendes, entsprechend mehrpoliges Kabel 8. Ein Bündel von Steuerkabeln 9 führt von den Einschüben 5 zu den zu steuernden Geräten.

An der Oberseite des Gehäuses 1 sind Ausnehmungen 10 erkennbar, über welche die elektrische Verbindung zwischen dem dargestellten Einschubrahmen 4 und einem weiteren Einschubrahmen möglich ist. Insbesondere kann auf das Gehäuse 1 ein eben solches Gehäuse aufgesetzt werden, dessen Einschubrahmen dabei automatisch elektrisch mit dem Einschubrahmen 4 des dargestellten Gehäuses 1 verbunden wird.

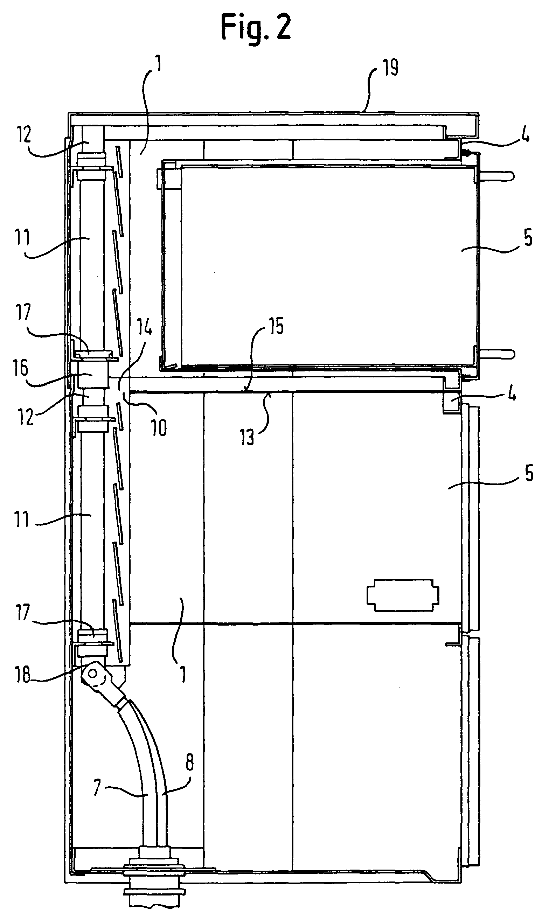

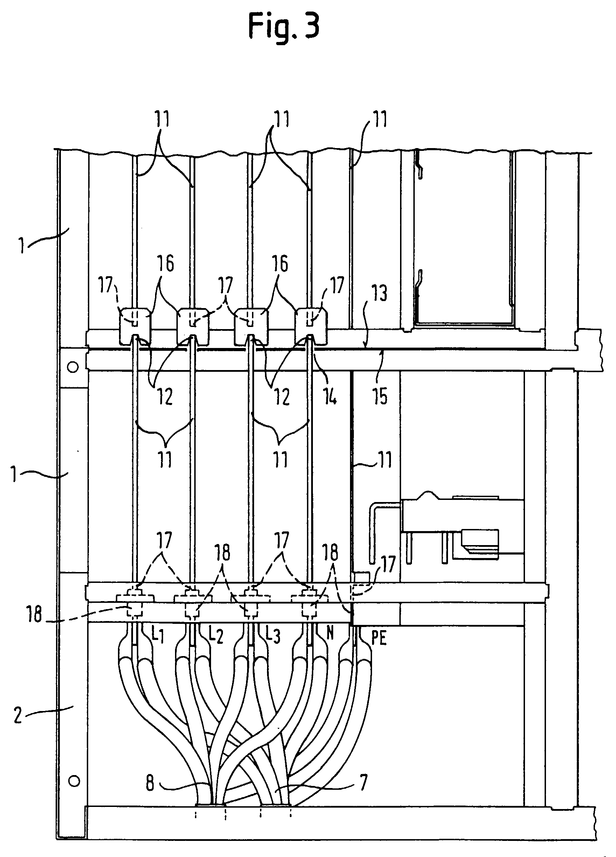

Anhand der Figuren 2 und 3 ist erkennbar, wie die elektrische Verbindung bewerkstelligt ist. Hierfür sind im rückwärtigen Bereich des Einschubrahmens 4 je Pol der elektrischen Energieversorgung eine, also insgesamt fünf Kontaktschienen 11 vorhanden, die sich parallel zueinander von der Unterseite des Gehäuses 1 bis zu dessen Oberseite erstrecken. An der Oberseite des Gehäuses 1 ragen die Kontaktschienen 11 mit ihrem oberen Ende 12 durch die Öffnungen 10 über die obere Gehäusewand 13 hinaus. Über entsprechende Öffnungen 14 in der unteren Gehäusewand 15 des Gehäuses 1 ragen diese Enden 12 in das darüberliegende Gehäuse 1, wo sie bei aufeinandergesetzten Gehäusen 1 mit entsprechend als Steckaufnahme ausgebildeten Endabschnitten 16 am unteren Ende 17 der Kontaktschienen 11 in Eingriff treten. Die Steckaufnahmen 16 und die oberen Enden 12 der Kontaktschienen 11 bilden also eine Steckverbindung, über welche die einander zugeordneten Kontaktschienen 11 übereinandergestapelter Gehäuse 1 miteinander automatisch kontaktiert werden.

Das untere Ende 17 der Kontaktschienen 11 des untersten Gehäuses 1 ist jeweils über Verbindungselemente 18 an die elektrischen Zu- und Abführleitungen 7, 8 angeschlossen. Auf das oberste Gehäuse 1 ist, wie in Figur 2 dargestellt, ein Deckel 19 aufgesetzt, welcher ebenfalls mit Steckern 16 ausgerüstet ist, die auf die oberen Enden 12 der Kontaktschienen 11 des darunterliegenden Gehäuses 1 aufsteckbar sind. Über den Deckel 19 werden so die Kontaktschienen 11 des obersten Gehäuses 1 abgedeckt.

Wie dargestellt, können die erfindungsgemäßen Gehäuse 1 mit Ein-. schubrahmen 4 einzeln oder gruppenweise dezentral angeordnet werden, um eine Steuerung von Geräten, beispielsweise Motoren, auszuführen. Nicht dargestellt ist eine zentrale Energieversorgung mit einem Hauptschalter. Außerdem können zwischen den einzelnen Einschubrahmen 4 oder Gruppen von Einschubrahmen 4 Zwischenschalter vorgesehen sein. Die Gehäuse 1 mit Einschubrahmen 4 können mit den beschriebenen Mitteln in der gewünschten Anzahl übereinandergestapelt werden, wobei eine automatische Kontaktierung erfolgt. Durch diesen modulartigen Aufbau ergibt sich eine hohe Flexibilität bei gleichzeitig günstigen Herstellungskosten. Durch die Dezentralität entfallen außerdem lange Steuerkabel zwischen der Zentrale und den zu steuernden Geräten. Lediglich die Energieversorgung muß über die Ringleitung 5 zu den einzelnen Einschubrahmen 4 oder Gruppen von Einschubrahmen 4 geführt werden.

### Bezugszeichenliste

- 1: Gehäuse
- 2: Fuß
- 3: Klappe
- 4: Einschubrahmen
- 5: Einschub
- 6: Ringleitung
- 7: Zufuhrkabel
- 8: Abfuhrkabel
- 9: Steuerkabelbündel
- 10: Öffnung
- 11: Kontaktschiene
- 12: oberes Ende von 11
- 13: obere Gehäusewand
- 14: Öffnung
- 15: untere Gehäusewand
- 16: Steckaufnahme
- 17: unteres Ende von 11
- 18: Verbindungsmittel
- 19: Deckel

## Patentansprüche

1. Elektrische Schaltanlage zur Steuerung mehrerer Geräte, insbesondere Motoren, mit mehreren Einschubrahmen (4), in die jeweils ein oder mehrere Einschübe (5) mit Schaltgeräten einschiebbar und mit dort vorhandenen Energieversorgungsanschlüssen (11) kontaktierbar sind, einer gemeinsamen Energieversorgung für die Einschubrahmen (4) und jedem Schaltgerät zugeordneten separaten Steuerleitungen (9),
dadurch gekennzeichnet,
daß die Einschubrahmen (4) für die Schaltgeräte jeweils einzeln oder gruppenweise in der Nähe der zugeordneten zu steuernden Geräte angeordnet sind, und daß die Energieversorgung über in einem Ring (6) von Einschubrahmen (4) zu Einschubrahmen (4) geführte Leitungen (7, 8) erfolgt.

2. Elektrische Schaltanlage nach Anspruch 1,
dadurch gekennzeichnet,
daß die Einschubrahmen (4) als stapelbare Einheiten ausgebildet sind.

3. Elektrische Schaltanlage nach Anspruch 2,
dadurch gekennzeichnet,
daß die Energieversorgungsanschlüsse (11) der stapelbaren Einschubrahmen (4) automatisch miteinander kontaktierbar sind.

4. Elektrische Schaltanlage nach Anspruch 3,
dadurch gekennzeichnet,
daß die Einschubrahmen (4), insbesondere rückwärtig, vertikale Kontaktschienen (11) aufweisen, die beim Stapeln der Einschubrahmen (4) jeweils miteinander in Kontakteingriff gelangen.

5. Elektrische Schaltanlage nach Anspruch 4,
dadurch gekennzeichnet,
daß die beiden Enden (12, 17) der Kontaktschienen (11) jeweils als zueinander reziproke Stecker (16) und Steckeraufnahme ausgebildet sind.

6. Elektrische Schaltanlage nach einem der Ansprüche 2 bis 5,
dadurch gekennzeichnet,
daß ein auf den obersten Einschubrahmen (4) aufsetzbarer Deckel (19) vorgesehen ist.

7. Elektrische Schaltanlage nach einem der vorhergehenden Ansprüche,
dadurch gekennzeichnet,
daß an einer Zentrale ein Hauptleistungsschalter für die Energieversorgung aller Einschubrahmen (4) vorgesehen ist.

8. Elektrische Schaltanlage nach einem der vorhergehenden Ansprüche,
dadurch gekennzeichnet,
daß zwischen den Einschubrahmen (4) Zwischenschalter für die Energieversorgung vorgesehen sind, über die einzelne oder mehrere Einschubrahmen (4) von der Energieversorgung abtrennbar sind.

9. Elektrische Schaltanlage nach einem der vorhergehenden Ansprüche,
dadurch gekennzeichnet,
daß die Schaltgeräte jeweils eine Überlastschutzeinrichtung und/oder Meldekontakte aufweisen.

10. Elektrische Schaltanlage nach einem der vorhergehenden Ansprüche,
dadurch gekennzeichnet,
daß sie für Schaltgeräte mit Leistungen bis ca. 630 A, insbesondere zwischen ca. 200 A und ca. 250 A, ausgelegt ist.
